# EUROPEAN PATENT APPLICATION

(11) **EP 4 822 041 A1**
(43) Date of publication of application: **14.10.2026**
(21) Application number: 25773968.0
(22) Date of filing: 14.01.2025
(51) Int. Cl.: C22B 1/16

(54) **METHOD FOR PRODUCING SINTERED ORE**

(30) Priority: 19.03.2024 JP 2024043129
(71) Applicant: JFE Steel Corporation, Tokyo 100-0011 (JP)
(72) Inventor: MIYAMURA, Wataru, Tokyo 100-0011 (JP); MURAO, Akinori, Tokyo 100-0011 (JP); HIGUCHI, Takahide, Tokyo 100-0011 (JP); IWAMI, Yuji, Tokyo 100-0011 (JP)
(74) Representative: Grünecker Patent- und Rechtsanwälte PartG mbB
(86) International application number: PCT/JP2025/000888
(87) International publication number: WO 2025/197264

(57) **Abstract**

Provided is a method for producing a sintered ore in which, even when a sintered ore is produced using an ore having a low combined water content, good reducibility is achieved by forming a predetermined amount of pores inside the sintered ore.

A method for producing a sintered ore from a sintering raw material in which iron ores having an iron content of 58.00 mass% or more, a combined water content of 4.00 mass% or more and less than 9.00 mass%, an Al₂O₃ content of 2.00 mass% or more, and an SiO₂ content of less than 5.00 mass% are blended in an amount of 15.0 mass% or more, and a total combined water contained in all iron ores blended in the sintering raw material is 0.0 mass% or more and less than 3.0 mass%, in which an average particle diameter of the all iron ores blended in the sintering raw material is 2.0 mm or less.

## Description

### Technical Field

The present invention relates to a method for producing a sintered ore from a sintering raw material containing iron ore.

### Background Art

Sintered ore, which is a raw material for the blast furnace ironmaking process, is produced by sintering a sintering raw material containing iron ore powder, auxiliary raw materials such as limestone, and carbonaceous materials such as coke. Iron ores used as the raw material include a variety of brands having different compositions and particle sizes, and a plurality of brands of iron ores are blended to form the sintering raw material.

Iron ores used in Japan are broadly classified into hematite ores and magnetite ores from South America, and Australian hematite ores, pisolite ores, and Marra Mamba ores. With regard to Australian iron ores, since the 2000s, as hematite ores have been becoming depleted, the use of pisolite ores has expanded. Since then, Australian pisolite ores have been widely used as iron ores. In recent years, Australian pisolite ores have also been becoming depleted, and Australian iron ores are being replaced from pisolite ores to Marra Mamba ores. Iron ores from South America have a high Fe content and are of high grade; however, the production areas are remote, which poses a problem in terms of transportation costs. In the future, as Australian pisolite ores become depleted, it is expected that the use of South American iron ores and Australian Marra Mamba ores as sintered ore will expand. The properties and compositions of various iron ores are shown in Table 1.

**[Table 1]**

| Iron Ore Type | Fe Content [mass %] | SiO₂ Content [mass %] | Al₂O₃ Content [mass %] | Fine Particles Content [mass %] | Combined Water Content [mass%] |
|---|---|---|---|---|---|
| Australian Pisolite Ore A | 56.50 | 6.50 | 1.70 | 0 | 10.09 |
| Australian Marra Mamba Ore B | 60.50 | 4.40 | 2.35 | 31 | 5.94 |
| High-grade Fine Ore C | 65.80 | 4.70 | 0.16 | 35 | 0.24 |
| Australian Pisolite Ore D | 56.00 | 5.70 | 3.20 | 4 | 9.90 |
| South American Ore E | 62.85 | 4.95 | 1.35 | 34 | 2.85 |
| South American Ore F | 65.00 | 1.90 | 1.40 | 18 | 3.20 |
| South American Ore G | 62.00 | 7.50 | 0.70 | 55 | 1.66 |

As shown in Table 1, Marra Mamba ores have a higher content of fine particles having a diameter of 0.15 mm or less than pisolite ores. In addition, Marra Mamba ores have a lower combined water content than pisolite ores. Based on these, developments have been made in sintering of sintering raw materials using Marra Mamba ores for the purpose of improving productivity by improving permeability of the sintering raw material and improving strength of the sintered ore.

Patent Literature 1 discloses a method for preventing problems caused by particle size of Marra Mamba ores by setting a blending ratio of Marra Mamba ores in all iron ores to 70 mass% or less. According to Patent Literature 1, by limiting the blending ratio of Marra Mamba ores, a proportion of fine ore having a particle diameter of 0.25 mm or less is limited, and thereby an influence on productivity can be suppressed. Further, under such conditions, by setting a blending ratio of hematite ores or magnetite ores to 20 mass% or more, a sintered ore having high strength can be obtained with good productivity.

Patent Literature 2 discloses a method for obtaining a sintered ore having high cold strength with good productivity by blending a plurality of iron ores such that an average pore volume of the iron ores is 0.09 cm³/g or less. According to Patent Literature 2, even when Marra Mamba ores are used, by limiting the average pore volume of the iron ores, a sintered ore having high strength can be obtained with good productivity.

Patent Literature 3 also discloses a method for producing a sintered ore. Specifically, first, pisolite ores are added to Marra Mamba ores to prepare a mixture in which an SiO₂ content is 3.0 to 5.0 mass% and a content of fine particles having a particle diameter of 0.5 mm or less is less than 30 mass%, water is added in an amount of 5 to 10 mass%, and the mixture is mixed and granulated using a high-speed stirring mixer. Then, in the method for producing a sintered ore that is disclosed, a solid fuel and other ores are added, and after mixing and granulation are performed again, sintering is carried out. According to Patent Literature 3, by adding porous pisolite ores to Marra Mamba ores and adding an appropriate amount of water, followed by mixing and granulation using a high-speed stirring mixer, a part of fine particles of Marra Mamba ores adheres to open pores of the pisolite ores, and a mixed granulated material having a reduced amount of fine particles is obtained. As a result, pseudo particle diameter and pseudo particle strength are improved, and permeability during the sintering process is improved, thereby improving productivity and yield of product.

### Citation List

### Patent Literature

PTL 1: JP5004421B
PTL 2: JP4661154B
PTL 3: JP2004-137575A

### Summary of Invention

### Technical Problem

As disclosed in Patent Literatures 1 to 3, conventionally, with respect to production of sintered ore using Marra Mamba ores, technologies have been developed for improving permeability of a sintering raw material in a sintering process, improving productivity of the sintered ore, and improving strength of the sintered ore. On the other hand, with respect to sintered ore produced using Marra Mamba ores, no development has been made regarding an influence on reducibility when applied to blast furnace operation. Reducibility of sintered ore can be said to be a factor that greatly affects operation of a blast furnace. In particular, when reducibility of the sintered ore decreases, a reducing agent ratio in the blast furnace increases, resulting in an increase in CO₂ emissions and an increase in cost for the reducing agent. For these reasons, sintered ore used as a raw material for a blast furnace is required to have high reducibility.

Accordingly, the present inventors conducted an investigation on an influence on reducibility of sintered ore produced using Marra Mamba ores. As a result, it was confirmed that sintered ore produced using Marra Mamba ores has a reduced porosity and a reduced reducibility as compared with sintered ore produced using pisolite ores. Further, it was also confirmed that, when sintered ore is produced by using, in combination with Marra Mamba ores, South American ores having a lower combined water content than Marra Mamba ores, reducibility is further reduced.

Here, in production of sintered ore using iron ore, combined water contained in the iron ore is released from the iron ore and forms pores inside the iron ore during a temperature rising process accompanying progress of a sintering process. Therefore, as the combined water content of the iron ore increases, porosity of the produced sintered ore increases, and, when the sintered ore is applied to blast furnace operation, reducibility of the sintered ore is improved.

Based on this, in the future, as depletion of pisolite ores having a high combined water content progresses, it is expected that the combined water content of iron ores used in a sintering process will continue to decrease. Therefore, it is also expected that it will become difficult to produce sintered ore satisfying high reducibility. Accordingly, with respect to production of sintered ore, there is a demand for development of a method for producing a sintered ore capable of forming a predetermined amount of pores inside, even when Marra Mamba ores having a lower combined water content than pisolite ores are used.

The present invention has been made in view of the above circumstances, and an object thereof is to provide a method for producing a sintered ore in which, even when a sintered ore is produced using an ore having a low combined water content, reducibility is improved by forming a predetermined amount of pores inside.

### Solution to Problem

The gist and configuration of the present invention for solving the above problems are as follows.
[1] A method for producing a sintered ore from a sintering raw material in which iron ores having an iron content of 58.00 mass% or more, a combined water content of 4.00 mass% or more and less than 9.00 mass%, an Al₂O₃ content of 2.00 mass% or more, and an SiO₂ content of less than 5.00 mass% are blended in an amount of 15.0 mass% or more, and a total combined water contained in all iron ores blended in the sintering raw material is 0.0 mass% or more and less than 3.0 mass%, in which an average particle diameter of the all iron ores blended in the sintering raw material is 2.0 mm or less.
[2] The method for producing a sintered ore according to item [1], in which an amount of coke breeze blended in the sintering raw material is less than 4.0 mass%.
[3] The method for producing a sintered ore according to item [1] or [2], in which a blending of the sintering raw material is adjusted such that a CaO content of the sintered ore is 11.0 mass% or more.

### Advantageous Effects of Invention

Even when a sintered ore is produced using an ore having a low combined water content, reducibility is improved by forming a predetermined amount of pores inside.

### Description of Embodiments

Hereinafter, the present invention will be described through embodiments of the present invention.

In production of sintered ore, when Marra Mamba ores are used as a substitute for pisolite ores, a total combined water blending amount inside a sintering raw material becomes smaller than in a case where pisolite ores are used. Due to this, it has been found that, when the sintering raw material is sintered by a sintering process, reducibility of the sintered ore decreases due to a decrease in porosity inside the produced sintered ore. Therefore, even when Marra Mamba ores are used in production of sintered ore, in order to obtain a sintered ore having good reducibility by forming a predetermined amount of pores inside, it is necessary to form pores based on other methods in addition to formation of pores caused by combined water contained in the iron ores.

Here, it is known that porosity in sintered ore is affected not only by a combined water content of iron ores used, but also by a particle diameter of the iron ores and a blending amount of fuel such as coke breeze blended in a sintering raw material. Therefore, even when Marra Mamba ores are used, in order to form a predetermined amount of pores inside the sintered ore, it is necessary to examine a particle diameter of the iron ores and blending conditions thereof in a sintering raw material to be subjected to a sintering process.

Based on these findings, the present inventors prepared a sintering raw material in which various iron ores such as Marra Mamba ores are blended, produced a sintered ore by subjecting the sintering raw material to a sintering process, and conducted intensive studies on an influence of a particle diameter of the iron ores and a blending amount of fuel such as coke breeze on the sintered ore. As a result, it has been found that, even when sintered ore is produced using Marra Mamba ores having a lower combined water content than pisolite ores, reducibility is improved by forming a predetermined amount of pores inside, and thus a method for producing a sintered ore has been found.

Further, as a result of studies by the present inventors, it has been found that, for sintered ore produced using pisolite ores, JIS-RI, which is an index indicating reducibility, is 65% or more, and that, in order to obtain sintered ore having a JIS-RI of 65% or more, it is necessary to set porosity of the sintered ore to 20 % or more. That is, it has been found that, in order to produce sintered ore satisfying reducibility equivalent to that of sintered ore produced using conventionally used pisolite ores, a production method in which porosity is set to 20 % or more is required. Here, JIS-RI as reducibility means "relative reducibility" defined in "JIS M 8713". A method for producing a sintered ore according to the present invention will be described below.

In the method for producing a sintered ore of the present invention, a sintering raw material is blended with iron ore having an iron content of 58.00 mass% or more, a combined water content of 4.00 mass% or more and less than 9.00 mass%, an Al₂O₃ content of 2.00 mass% or more, and an SiO₂ content of less than 5.00 mass%, in an amount of 15.0 mass% or more.

As shown in Table 1, the iron ore having an iron content of 58.00 mass% or more, a combined water content of 4.00 mass% or more and less than 9.00 mass%, an Al₂O₃ content of 2.00 mass% or more, and an SiO₂ content of less than 5.00 mass% means Marra Mamba ores. Further, since use of Marra Mamba ores is use as a substitute for pisolite ores, a blending amount of Marra Mamba ores in a sintering raw material is set to 15 mass% or more.

Further, in the present invention, a sintered ore is produced from a sintering raw material in which a total combined water contained in all iron ores blended is in an amount of 0.0 mass% or more and less than 3.0 mass%. That is, in the present invention, with respect to formation of pores in the produced sintered ore, a method is employed in which even when a blending amount of total combined water inside the sintering raw material is low, formation of pores is performed based on other methods, in addition to formation of pores caused by a combined water content of the iron ore (Marra Mamba ores). Therefore, porosity can be set to 20 vol% or more, and a sintered ore having good reducibility can be obtained.

In the method for producing a sintered ore according to the present invention, an average particle diameter of all iron ores blended in a sintering raw material is set to 2.0 mm or less.

By setting an average particle diameter of all iron ores (including Marra Mamba ores) blended in a sintering raw material to 2.0 mm or less, pores inside sintered ore after a sintering process are formed uniformly and finely, and loss of pores during breakage of the sintered ore can be suppressed. Therefore, an amount of pores remaining in the sintered ore as a product increases, and a sintered ore having a porosity of 20 vol% or more and a JIS-RI as reducibility of 65% or more can be obtained. Here, as the average particle diameter of the iron ores, an arithmetic mean diameter of particles of all iron ores blended in the raw materials may be used. Further, as JIS-RI as reducibility, a "relative reducibility" defined in "JIS M 8713" may be used.

From the above, by using the method for producing a sintered ore according to the present invention, even when a sintered ore is produced using an ore having a low combined water content, reducibility is improved by forming a predetermined amount of pores inside.

Further, in the present invention, it is preferable that a blending amount of coke breeze blended in a sintering raw material is 3.5 mass% or more and less than 4.0 mass%. In the sintering raw material, by limiting a blending amount of a solid fuel (coke breeze) that is combusted in a sintering process, excessive generation of a melt generated inside a sintering cake during execution of the sintering process is suppressed, and clogging of pores due to penetration of the melt is suppressed. Therefore, for sintered ore after the sintering process, porosity can be improved, and reducibility of a blast furnace raw material when applied to blast furnace operation can be improved. In this case, porosity of the sintered ore after the sintering process can be increased to 27 vol% or more, and JIS-RI as reducibility can be increased to 70% or more.

Here, when examining application of sintered ore to blast furnace operation, it is preferable to also examine low-temperature reduction-disintegration property of the sintered ore. The low-temperature reduction-disintegration property is used as an index indicating deterioration of productivity and energy efficiency in blast furnace operation. More specifically, sintered ore undergoes disintegration in an initial stage of a reduction reaction in a blast furnace. As the disintegration progresses, permeability in the furnace deteriorates, and operation of the blast furnace becomes unstable. Therefore, the low-temperature reduction-disintegration property is used as an index indicating disintegration property of sintered ore in an initial stage of reduction in the blast furnace.

Further, it is known that low-temperature reduction-disintegration property of sintered ore has a trade-off relationship with reducibility of a blast furnace raw material when applied to blast furnace operation. That is, while an amount of pores in the sintered ore increases to improve reducibility of the blast furnace raw material, there is a problem in that reduction disintegration of the sintered ore is induced. Therefore, in production of sintered ore, it is preferable to suppress low-temperature reduction-disintegration property of the sintered ore while increasing an amount of pores in the sintered ore to improve reducibility of the blast furnace raw material.

The present inventors have also conducted intensive studies on a method for producing a sintered ore that can increase an amount of pores in the sintered ore to improve reducibility of a blast furnace raw material, while being capable of suppressing low-temperature reduction-disintegration property. As a result, it has been found that low-temperature reduction-disintegration property of the sintered ore depends on blending conditions of various raw materials in a sintering raw material before a sintering process is performed.

Based on these findings, in the present invention, in order to suppress low-temperature reduction-disintegration property of sintered ore, it is preferable to adjust blending of a sintering raw material such that a CaO content of the sintered ore is 11.0 mass% or more. Specifically, it is preferable to increase a CaO content in the sintering raw material by adjusting a blending ratio of limestone or quicklime contained in the sintering raw material. By increasing the CaO content in the sintering raw material, formation of calcium ferrite in the sintering process is promoted, and, due to this, formation of hematite that causes low-temperature reduction-disintegration is suppressed. Further, when the CaO content of the sintered ore is excessively increased, an amount of slag generated in a blast furnace increases, which causes a decrease in energy efficiency in operation of the blast furnace. Therefore, it is preferable to adjust the CaO content in the sintering raw material such that the CaO content of the sintered ore is 12.0 mass% or less while suppressing low-temperature reduction-disintegration property.

Therefore, an average particle diameter of iron ores (Marra Mamba ores) and other iron ores blended in a sintering raw material is set to 2.0 mm or less, and a blending amount of coke breeze blended in the sintering raw material is set to less than 4.0 mass%. In addition, blending of the sintering raw material is adjusted such that a CaO content of the sintered ore is 11.0 mass% or more. As a result, a sintered ore can be obtained in which porosity is 27 vol% or more, JIS-RI as reducibility is 70% or more, and RDI as low-temperature reduction-disintegration property is less than 30%. That is, a sintered ore that can achieve both good reducibility and suppression of low-temperature reduction-disintegration property can be obtained. Here, as RDI as low-temperature reduction-disintegration property, a "reduction-disintegration index RDI" defined in "JIS M 8720" may be used. Incidentally, a reduction-disintegration index (RDI) of sintered ore produced using pisolite ores is about 30%. Therefore, by adjusting the CaO content of the sintered ore to a predetermined value, it becomes possible to suppress low-temperature reduction-disintegration property as compared with a case where pisolite ores are used.

The method for producing a sintered ore of the present invention may be carried out as follows. First, several percent of water are added to iron ore powder, auxiliary raw materials containing CaO such as limestone, auxiliary raw materials containing SiO₂ such as silica stone, and carbonaceous materials such as coke, followed by mixing and granulation to obtain a sintering raw material formed into pseudo-particles. Next, the sintering raw material formed into pseudo-particles is charged onto a grate to form a raw material layer, and a surface layer of the raw material layer is ignited. Then, while air is drawn downward, combustion of the carbonaceous materials is allowed to proceed downward, and the sintering raw material is sintered by heat of combustion of the carbonaceous materials to produce a sinter cake. Thereafter, the produced sinter cake is subjected to crushing and sizing, and particles having a predetermined size or more are used as a raw material for blast furnace ironmaking.

### Examples

Examples carried out using the method for producing a sintered ore of the present invention will be described below.

Various iron ore powders, auxiliary raw materials containing CaO such as limestone, auxiliary raw materials containing SiO₂ such as silica stone, and carbonaceous materials such as coke were blended, and several percent of water were added thereto, followed by mixing and granulation to obtain a sintering raw material formed into pseudo-particles. A sintering test was performed on the sintering raw material formed into pseudo-particles using a cylindrical sintering test pot having a diameter of 300 mm. On a grate inside a cylindrical sintering test pot, sintered ore was charged to a thickness of 20 mm as a bedding layer, and a pseudo-granulated sintering raw material was charged thereon as a sintering raw material layer. For the charged sintering raw material layer, carbonaceous materials contained in an upper portion were ignited, and while air was drawn downward, combustion of the carbonaceous materials was allowed to proceed downward, thereby sintering the sintering raw material layer by heat of combustion of the carbonaceous materials to obtain a sinter cake. Table 2 shows, for each Example, raw material blending amounts in the sintering raw material, an average particle diameter of all iron ores, a total combined water blending amount, and a target composition of the sintered ore (sintered ore composition). Table 3 shows sintering conditions of the sintering process in each Example. Here, the total combined water blending amount means an amount of total combined water contained in all iron ores blended in the sintering raw material, relative to the sintering raw material, in which all raw materials listed as raw material blending amounts are blended.

**[Table 2]**

| | | Com. Ex. 1 | Com. Ex. 2 | Com. Ex. 3 | Com. Ex. 4 | Ex. 1 | Ex. 2 | Ex. 3 | Ex. 4 |
|---|---|---|---|---|---|---|---|---|---|
| Raw Material Blending Amounts [mass%] | Australian pisolite ore A | 31.6 | 31.8 | 0.0 | 0.0 | 0.0 | 0.0 | 0.0 | 0.0 |
| | Australian Marra Mamba ore B | 0.0 | 0.0 | 31.2 | 18.9 | 22.5 | 22.6 | 25.4 | 25.5 |
| | High-grade fine ore C | 0.0 | 0.0 | 0.0 | 0.0 | 10.3 | 10.4 | 6.4 | 6.4 |
| | Australian pisolite ore D | 6.3 | 6.4 | 6.3 | 6.3 | 0.0 | 0.0 | 6.4 | 6.4 |
| | South American ore E | 25.3 | 25.5 | 25.0 | 25.1 | 32.7 | 33.0 | 25.4 | 25.6 |
| | South American ore F | 0.0 | 0.0 | 0.0 | 0.0 | 0.0 | 0.0 | 0.0 | 0.0 |
| | South American ore G | 0.0 | 0.0 | 0.0 | 12.6 | 0.0 | 0.0 | 0.0 | 0.0 |
| | Silica stone | 0.0 | 0.0 | 0.7 | 0.3 | 0.1 | 0.1 | 0.7 | 0.7 |
| | Quicklime | 0.0 | 1.0 | 0.0 | 1.0 | 1.9 | 1.9 | 1.9 | 1.9 |
| | Return fines | 19.1 | 19.0 | 19.1 | 19.1 | 19.2 | 19.2 | 19.1 | 19.2 |
| | Limestone | 13.4 | 12.0 | 13.4 | 12.4 | 9.0 | 9.1 | 10.4 | 10.5 |
| | Coke breeze | 4.3 | 4.3 | 4.3 | 4.3 | 4.3 | 3.7 | 4.3 | 3.8 |
| Total Combined water Blending Amount [mass%] | | 4.5 | 4.7 | 3.2 | 2.7 | 2.3 | 2.3 | 2.9 | 2.9 |
| Average Particle Diameter of All Iron Ores [mm] | | 3.5 | 3.5 | 2.2 | 2.1 | 1.8 | 1.8 | 2.0 | 2.0 |
| Sintered Ore Composition [mass%] | CaO | 11.0 | 10.8 | 11.0 | 11.2 | 10.0 | 10.0 | 11.0 | 11.0 |
| | SiO₂ | 5.8 | 5.7 | 5.8 | 5.6 | 5.0 | 5.0 | 5.8 | 5.8 |

**[Table 3]**

| | | Com. Ex. 1 | Com. Ex. 2 | Com. Ex. 3 | Com. Ex. 4 | Ex. 1 | Ex. 2 | Ex. 3 | Ex. 4 |
|---|---|---|---|---|---|---|---|---|---|
| Sintering Process | Layer thickness [mm] | 380 | 380 | 380 | 380 | 580 | 580 | 380 | 380 |
| | Negative pressure during sintering [kPa] | 10.0 | 7.7 | 10.0 | 7.7 | 10.5 | 10.5 | 10.0 | 10.0 |

Then, the obtained sinter cake was crushed by dropping it four times from a height of 2 m, and sintered ore having a size of 5 mm or more was recovered and used for evaluation of reducibility, porosity, and low-temperature reduction-disintegration property. Evaluation of reducibility of the sintered ore was performed by measuring a relative reducibility defined in JIS M 8713. Evaluation of low-temperature reduction-disintegration property of the sintered ore was performed by measuring a reduction-disintegration index (RDI) defined in JIS M 8720. Evaluation of porosity of the sintered ore was performed as follows. First, an apparent density was measured by a hydrostatic weighing method using water, and a true density was measured by pulverizing the sintered ore and measuring, by a boiling method, the sintered ore that passed through a sieve having an opening of 250 µm. Then, based on the true density obtained from the measurement results, the porosity of the sintered ore was calculated from a pore volume per unit volume of the sintered ore. Table 4 shows results of evaluation of the sintered ore.

**[Table 4]**

| | | Com. Ex. 1 | Com. Ex. 2 | Com. Ex. 3 | Com. Ex. 4 | Ex. 1 | Ex. 2 | Ex. 3 | Ex. 4 |
|---|---|---|---|---|---|---|---|---|---|
| | Porosity [vol%] | 24.8 | 26.0 | 21.9 | 17.9 | 22.2 | 28.2 | 26.4 | 29.3 |
| Sintered Ore | Reducibility [%] | 74.8 | 71.1 | 70.4 | 64.0 | 68.9 | 73.1 | 69.8 | 73.3 |
| | Low-temperature reduction- disintegration index [%] | 28.8 | 31.9 | 30.7 | 30.8 | 35.8 | 31.2 | 25.4 | 26.2 |

Comparative Examples 1 and 2 are cases in which sintered ore was produced by blending pisolite ore in a sintering raw material. In Comparative Examples 1 and 2, since pisolite ore is used, as shown in Table 4, the porosity is 20 vol% or more and the reducibility is 65% or more. Further, in Comparative Examples 1 and 2, due to use of pisolite ore, the reduction-disintegration index (RDI) is about 30% in each case.

Comparative Examples 3 and 4 are cases in which sintered ore was produced by blending Marra Mamba ore in a sintering raw material. In Comparative Examples 3 and 4, the porosity and the reducibility are lower than those in Comparative Examples 1 and 2. In Comparative Example 3, although Marra Mamba ore is used, since the total combined water blending amount exceeds 3 mass%, the porosity is 20 vol% or more and the JIS-RI is 65% or more. Further, in Comparative Example 4, since the total combined water blending amount is less than 3 mass% (see Table 2), the porosity is less than 20 vol% and the reducibility is less than 65%. That is, it was confirmed that when Marra Mamba ore is blended and the total combined water blending amount is small, the porosity decreases to less than 20 % and the JIS-RI decreases to less than 65%.

Example 1 is a case in which sintered ore was produced by blending Marra Mamba ore in a sintering raw material and, when the total combined water blending amount is less than 3.0 mass%, setting an average particle diameter of all iron ores blended in the sintering raw material to 2.0 mm or less. In Example 1, although the total combined water blending amount is as small as 2.3 mass%, the porosity is 20 vol% or more and the reducibility is 65% or more. That is, it was confirmed that, by blending Marra Mamba ore in the sintering raw material and setting the average particle diameter of all iron ores blended in the sintering raw material to 2.0 mm or less, a predetermined amount of pores is formed inside the produced sintered ore, and thereby good reducibility can be obtained. This is considered to be because, by reducing the particle diameter of the iron ores, the amount of pores remaining in the product sintered ore after crushing increases.

In Example 2, sintered ore was produced by blending Marra Mamba ore in a sintering raw material and, when the total combined water blending amount is less than 3.0 mass%, setting an average particle diameter of all iron ores blended in the sintering raw material to 2.0 mm or less and further setting a blending amount of coke breeze blended in the sintering raw material to less than 4.0 mass%. In Example 2, the porosity is 27 vol% or more and the reducibility is 70% or more. That is, Marra Mamba ore is blended in the sintering raw material, the average particle diameter of all iron ores blended in the sintering raw material is set to 2.0 mm or less, and the blending amount of coke breeze blended in the sintering raw material is set to less than 4.0 mass%. Therefore, it was confirmed that the porosity and the reducibility of the sintered ore obtained through the sintering process can be improved. This is considered to be because, by limiting the blending amount of coke breeze to less than 4.0 mass%, clogging of pores due to melt is suppressed.

In Example 3, sintered ore was produced by blending Marra Mamba ore in a sintering raw material and, when the total combined water blending amount is less than 3.0 mass%, setting an average particle diameter of all iron ores blended in the sintering raw material to 2.0 mm or less and further adjusting blending of the sintering raw material such that a CaO content of the sintered ore is 11.0 mass% or more. In Example 3, in order to set the CaO content of the sintered ore to 11.0 mass% or more, a blending amount of limestone was increased as compared with Examples 1 and 2. In Example 3, similarly to Example 1, the porosity is about 20 vol% or more and the reducibility is 65% or more. Further, in Example 3, as compared with Example 1, low-temperature reduction-disintegration property could be suppressed. Specifically, the low-temperature reduction-disintegration index is less than 30%, and better results are obtained as compared with Comparative Examples 1 and 2 in which pisolite ore is used. That is, Marra Mamba ore is blended in the sintering raw material, the average particle diameter of all iron ores blended in the sintering raw material is set to 2.0 mm or less, and blending of the sintering raw material is adjusted such that the CaO content of the sintered ore is 11.0 mass% or more. As a result, it was confirmed that, for the sintered ore obtained through the sintering process, by forming a predetermined amount of pores inside, good reducibility is achieved and low-temperature reduction-disintegration property of the sintered ore can be suppressed.

In Example 4, sintered ore was produced by blending Marra Mamba ore in a sintering raw material and, when the total combined water blending amount is less than 3.0 mass%, setting an average particle diameter of all iron ores blended in the sintering raw material to 2.0 mm or less and adjusting a blending amount of coke breeze blended in the sintering raw material to less than 4.0 mass%. In addition, blending of the sintering raw material was adjusted such that a CaO content of the sintered ore is 11.0 mass% or more. In Example 4, in order to set the CaO content of the sintered ore to 11.0 mass% or more, a blending amount of limestone was increased as compared with Examples 1 and 2. In Example 4, similarly to Example 2, the porosity is 27 vol% or more and the reducibility is 70% or more. Further, in Example 4, as compared with Example 2, low-temperature reduction-disintegration property could be suppressed. Specifically, the low-temperature reduction-disintegration index is less than 30%, and better results are obtained as compared with Comparative Examples 1 and 2 in which pisolite ore is used. That is, Marra Mamba ore is blended in the sintering raw material, the average particle diameter of all iron ores blended in the sintering raw material is set to 2.0 mm or less, the blending amount of coke breeze is set to less than 4.0 mass%, and blending of the sintering raw material is adjusted such that the CaO content of the sintered ore is 11.0 mass% or more. As a result, it was confirmed that, for the sintered ore obtained through the sintering process, the porosity and the reducibility can be improved, and low-temperature reduction-disintegration property of the sintered ore can be suppressed.

## Claims

1. A method for producing a sintered ore from a sintering raw material in which iron ores having an iron content of 58.00 mass% or more, a combined water content of 4.00 mass% or more and less than 9.00 mass%, an Al₂O₃ content of 2.00 mass% or more, and an SiO₂ content of less than 5.00 mass% are blended in an amount of 15.0 mass% or more, and a total combined water contained in all iron ores blended in the sintering raw material is 0.0 mass% or more and less than 3.0 mass%,
wherein an average particle diameter of the all iron ores blended in the sintering raw material is 2.0 mm or less.

2. The method for producing a sintered ore according to claim 1,
wherein an amount of coke breeze blended in the sintering raw material is less than 4.0 mass%.

3. The method for producing a sintered ore according to claim 1 or 2,
wherein a blending of the sintering raw material is adjusted such that a CaO content of the sintered ore is 11.0 mass% or more.
